# EUROPEAN PATENT SPECIFICATION

(11) **EP 0 488 439 B1**
(45) Date of publication and mention of the grant of the patent: **05.10.1994**
(21) Application number: 91202970.9
(22) Date of filing: 15.11.1991
(51) Int. Cl.: A21C 13/02

(54) **Proving chamber comprising an endless conveying system and carriers connected therewith**
Raum zum aufgehen von Teig, welcher eine Förderanlage und damit verknüpfte Träger aufweist
Appareil permettant à la pâte de lever, comportant un transporteur sans fin et support s'y rapportant

(30) Priority: 27.11.1990 NL 9002579
(43) Date of publication of application: 03.06.1992
(73) Proprietor: WERNER & PFLEIDERER-HATON B.V., NL-5981 NK Panningen (NL)
(72) Inventor: Steeghs,Mathijs, NL-5981 VD Panningen (NL)
(74) Representative: Lips, Hendrik Jan George, Ir.

(56) References cited:
- FR-A- 1 557 905
- NL-A- 8 700 439

## Description

The invention relates to a proving chamber comprising a chamber and a conveying system therein consisting of at least one endless conveyor running in an almost vertical plane and being guided therein over a number of return rollers, at which the conveyor serves for supporting a number of carriers each consisting of an almost tube-shaped holder the centre line of which is almost horizontally and square to the plane of the conveyor, which holder has been provided with a longitudinal opening for bringing a piece of dough, or a number of pieces of dough lying next to each other in longitudinal direction of the holder, into the carrier or for removing a piece of dough therefrom, which carriers have been closed at the ends by transverse walls and means being present between a transverse wall and a conveyor for supporting the carriers in relation to the conveyor.

Such a proving chamber is known from NL-A-87 00439. With this known proving chamber, there are two conveyors running at a distance from each other and carriers being therebetween have been fixedly connected with these conveyors. Because of this, the longitudinal opening of a carrier is in a vertical plane with moving the carrier upwards or downwards. With moving the conveyors over a return roller, the carrier concerned is rotated over 180°. Owing to this, a piece of dough present in the carrier will start rolling by which forming of a film around the piece of dough and sticking of the piece of dough to the carrier will be prevented. A disadvantage of this known device is that the width of the longitudinal opening in the carrier is only somewhat larger than the size of a risen piece of dough, so that the carrier is not suitable for pieces of dough with variable dimensions, while in addition the feed and discharge of pieces of dough is hindered.

In particular during discharge of a piece of dough from a carrier the piece of dough can stick to the wall of the carrier, which wall is strongly curved and continues far towards the opening of the carrier This has a very disadvantageous effect on the subsequent processing of a piece of dough. However, it is not possible to enlarge the width of the longitudinal opening for avoiding far-continuing walls and preventing the piece of dough from sticking to the carrier during discharge of a piece of dough. Enlargement of the width would namely result therein, that the soft mass of dough would "flow" over the edge of the opening during the vertical movement of the conveyors.

The invention seeks to remove this difficulty and therefore provides for, that the means present between a transverse wall of a carrier and a conveyor are designed such that during the major part of the distance over which the carrier is displaced by means of the conveyor, a carrier will always take up a stable position with the opening of the carrier being directed upwards at a certain angle with the vertical and the carrier tilting from the one stable position to the other one when the conveyor moves over a return roller.

As a result of the opening of a carrier always being directed upwards at a certain angle, there is no danger of a part of a piece of dough flowing over the longitudinal edge of the opening. Nevertheless, the width of the opening can be large enough for enabling easily bringing a piece of dough into a carrier or removing a piece of dough therefrom.

When the part of the conveyor supporting a certain carrier moves around a turning wheel, the piece of dough in the carrier concerned will start rolling, so that sticking of the piece of dough to the carrier is prevented.

At the same time the carrier will move from the one stable position to the other stable position.

According to a further development of the invention it can be provided for, that at the last return roller, there where a piece of dough must be discharged from a carrier moving downwards, means have been provided for suddenly tilting the carrier concerned, which is possibly already somewhat rotated, from the one stable position, to the other stable position with the opening of the carrier being directed downwards.

Through this it can be achieved, that the moment in which a piece of dough is discharged from a carrier can be determined accurately. When for example the pieces of dough are conveyed further by means of a conveyor belt, the pieces of dough will be at almost equal distances from each other. Thus, a piece of dough falling out of a carrier is prevented from coming into contact with a piece of dough discharged from a preceding carrier or the pieces of dough falling out of consecutive carriers from coming to lie out of alignment on the discharge conveyor.

In particular, the means for supporting a carrier in relation to a conveyor can be a pair of bearing pins, which bearing pins are at some distance from each other and have been directed squarely to the plane of movement of the conveyor, in which during running of the parallel conveyor tracks the bearing pins of each pair are in a similar almost vertical plane and at least one of the bearing pins cooperates with a slot made in the transverse wall of the carrier being near the bearing pins.

According to a first development it can provided for, that the one pin of a pair of bearing pins cooperates with a slot made in the transverse wall of a carrier and the other bearing pin of the pair has been pivotally connected with the same transverse wall.

There is also the possibility of the one pin of a pair of bearing pins cooperating with a slot made in the transverse wall of a carrier and the other bearing pin of the pair cooperating with the same or with another slot in the transverse wall of the carrier.

As indicated, it is possible that the device comprises only one endles conveyor with bearing pins projecting to one side. Due to this, the conveyor will naturally be loaded one-sidedly and could start tilting to some degree. This can be largely prevented by mounting bearing pins and a carrier at both sides of the conveyor. Therewith it is naturally desirable that both carriers are also provided with a piece of dough during operation of the proving chamber. Such a structure can be applied in particular when each carrier has been pivotally mounted on a bearing pin, so that the longitudinal axis of the carrier is kept square to the plane of movement of the conveyor.

In particular it can be provided for, that the conveying system comprises two endless conveyors, which run in mutually parallel planes, which conveyors have been provided with bearing pins lying in line for pivotably supporting carriers in relation to the bearing pins and being present between the conveyors. Naturally, this requires the use of two endless conveyors, as they are also applied with above-mentioned dutch patent application.

The invention is further explained by means of embodiments, illustrated in the drawing, in which:
fig. 1 diagrammatically shows a side view of a device according to the invention;
fig. 2 diagrammatically shows a perspective view of a part of two conveyors with a carrier therebetween;
fig. 3 shows a side view of a carrier according to fig. 2 with the two accompanying bearing pins connected with a conveyor which is not shown;
fig. 4 and 5 show side views corresponding to fig. 3, yet of other embodiments of a carrier;
fig. 6 diagrammatically shows a side view of a part of fig. 1 on an enlarged scale; and
fig. 7 shows a part of fig. 6 with a carrier in the position immediately after it has been tilted by means of a pushing mechanism.

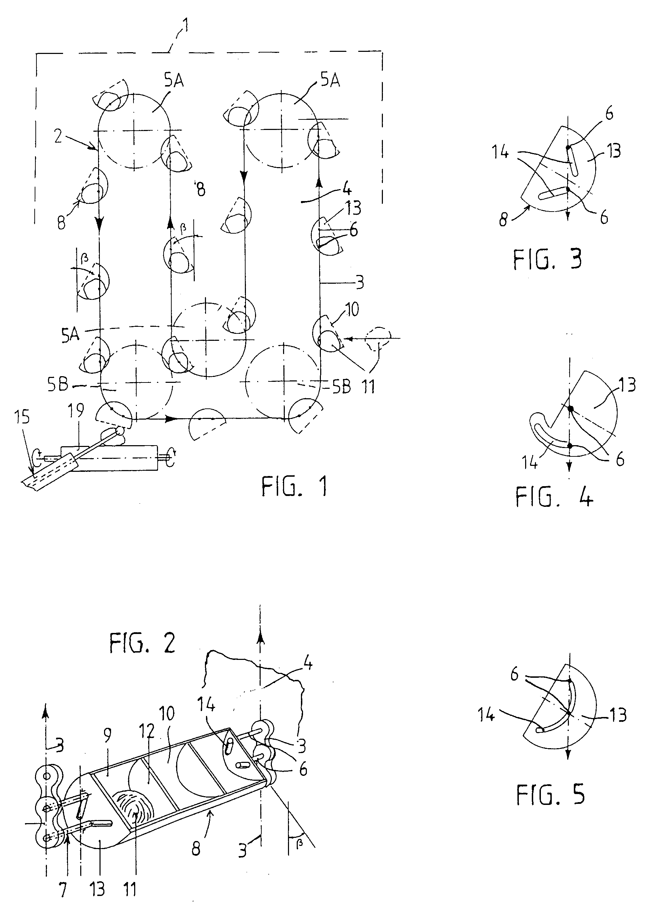

Fig. 1 shows a proving chamber of which the chamber 1 has only been indicated with some dash lines. Within the chamber is the conveying system 2 comprising two endless conveyors 3, which have been mounted one after the other in two vertical planes 4 running parallel (see also fig. 2).

As in particular indicated in fig. 2, the conveyors 3 can be endless chains. The conveyors 3 run over return rollers 5A and 5B, which can be chain wheels. At the return rollers 5A the conveyors are led round over 180° and at the rollers 5B over 90°.

As appears in particular from fig. 2, the endless conveyors 3 have been provided with bearing pins 6. Each conveyor has a pair 7 of such bearing pins 6 per carrier. The bearing pins 6 of the two conveyors 3 run in line in pairs and are square to the planes 4.

Two pairs 7 of such bearing pins 6 support one carrier 8, comprising a tube-shaped holder 9, which has been provided with a longitudinal opening 10 for bringing the pieces of dough 11 in and out of the holder. For the purpose of receiving more than one piece of dough in a carrier 8, cross plates 12 can be mounted in the tube-shaped holder 9, while the holder 9 has been closed off at the ends by means of transverse walls 13. In the transverse walls 13 are slots 14 which cooperate with the bearing pins 6.

The arrangement of bearing pins 6 and slots 14 during the vertical movement of the conveyor 3 is further indicated in fig. 3.

As appears therefrom, the two slots 14 form such an angle with each other, that the carrier concerned can take up two stable positions on the pins 6.

As indicated in fig. 4, there is also the possibility of one bearing pin 6 having been pivotally connected with a transverse wall 13 of the carrier 8 and the other bearing pin 6 cooperating with a slot 14 in the transverse wall 13 of a carrier 8.

Fig. 5 shows a further possibility of both bearing pins 6 being displaceable in one single slot 14 in the transverse wall 13.

With all embodiments illustrated in figs. 3, 4 and 5, it can be achieved that, as indicated in fig. 1, the plane in which the longitudinal opening 10 of the tube-shaped holder lies, encloses an angle β with the vertical plane. When two pairs of cooperating bearing pins 6 move over a return roller 5A, the carrier 8 will rotate and at a certain moment will tilt from the one stable position into the other stable position, with the plane of the longitudinal opening 10 again enclosing an angle β with the vertical plane.

When a carrier 8 ends up at a lower return roller 5B, so at the left in fig. 1, the carrier 8 will tilt to a position with the longitudinal opening 10 directed downwards. Through this, a piece of dough 11 can be removed from the carrier 8.

For removing the pieces of dough 11 from the successive carriers 8 at accurately determined moments, use can be made of a pushing mechanism 15, which can be activated at a certain moment. This pushing mechanism can be for example an air cilinder 16 provided with a piston rod 17 with a roller 18 thereto. The roller 18 can cooperate with a part of the transverse wall 13, so that the carrier 8 can suddenly be tilted from the one position to the other, as it will be described further.

After the empty carrier 8 has been led along the other return roller 5B by means of the conveyors 3, a new piece of dough 11 can be brought into the carrier 8, as it has been indicated at the right in fig. 1.

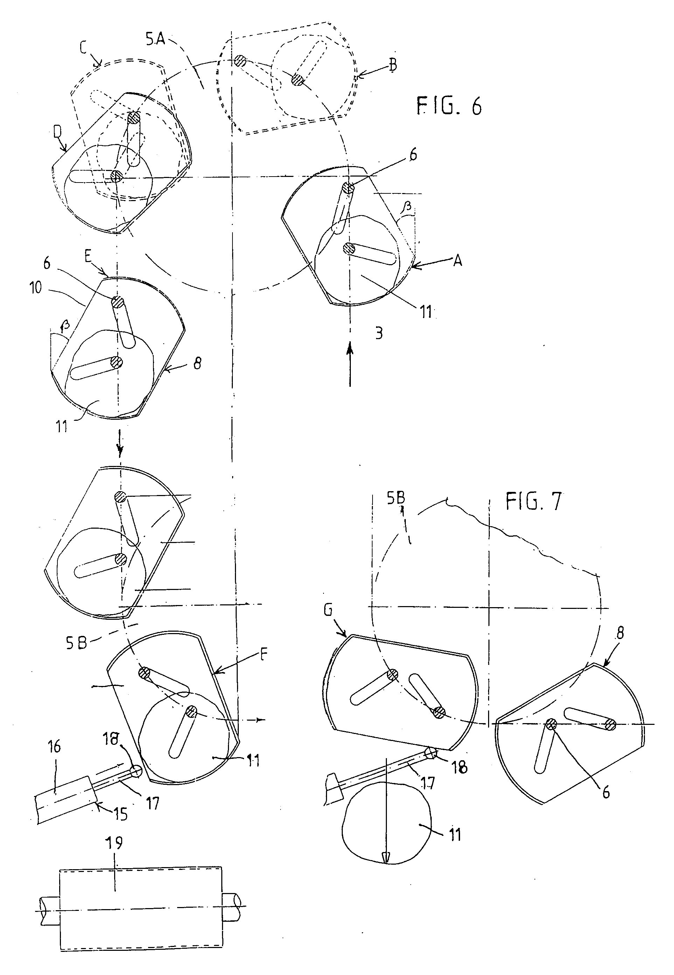

In fig. 6 it has been illustrated on an enlarged scale in which way the carriers 8 will tilt when the conveyors 3 move over the return rollers 5A and 5B.

As indicated at the right in fig. 6, the carriers 8 will move upwards and take up the stable position, indicated with A, on the pins 6. When a carrier 8 ends up at a return roller 5A, the pins 6 will start to take up another position in relation to each other and the carrier 8 can for example take up the positon as indicated with B. This will depend on the friction that occurs between the pins 6 and the carrier 8 and on the position of the piece of dough 11 in the carrier. The piece of dough can stick to the wall of the carrier to a more or lesser degree. In the position B, indicated with dash lines, the carrier has not yet carried out a displacement in relation to the pins 6. However, a similar displacement can have taken place. With further movement of the pins 6 and thus of the carrier 8, the carrier would move towards the position C indicated with dashed lines, yet it will not be able to take up this position, since it will have been tilted to the other stable position before this moment. This other stable position in relation to the pins 6 has been indicated with D. After that, the carrier will be rotated somewhat more, until the two pins 6 will be in a vertical plane and the carrier 8 has reached the position as has been indicated with E. At this, the plane of the opening 10 will again enclose an angle β with the vertical plane, like this was the case with moving upwards of the carrier 8, indicated in the right part of fig. 6.

When the carrier 8 ends up at a lower return roller 5B, the carrier is rotated to the position such as illustrated at the left below in fig. 6 and indicated with F. In this position F, the carrier 8 still takes up a stable position in relation to the pins 6 and the piece of dough 11 will not yet be able to fall out of the carrier 8.

At this moment, the pushing mechanism 15 already described above can be activated by which the carrier 8 is suddenly tilted from the position F to the position as illustrated at the left in fig. 7 and has been indicated with G. At that moment, the piece of dough 11 falls out of the carrier to end up on a conveyor belt 19, which has been indicated in the figs. 1 and 6.

As it appears from the right part of fig. 7, the carrier 8 remains in the same position in relation to the pins 6 with moving of the conveyors 3 from the one return roller 5B to the other return roller 5B, as has been indicated in fig. 1.

In principle, the carriers will take up approximately the same position as indicated in the figs. 6 and 7 when instead of the embodiment of the carriers according to fig. 3 the embodiments according to figs. 4 and 5 will be applied.

As already stated above, the two conveyors 3 can be replaced by one single conveyor, which will then be provided with bearing pins 6 at both sides. The parts of the conveyors 3 running vertically in fig. 1 could also extend in horizontal direction. However, two cooperating pins 6 of a conveyor 3 will then also have to be in a vertical plane so that then the conveyors will have to be designed wider.

One could also contemplate mounting of the pins 6 to the carriers 8 and receiving these pins 6 in slots 14, which have been made in parts of the conveyors. When chains are employed as conveyors, certain links of the chain can for example be broadened or be provided with protruding parts connected with the links, in which parts the slots 14 are.

However, all these possibilities will be clear to an expert and will need no further explanation.

## Claims

1. Proving chamber comprising a chamber (1) with therein a conveying system (2) consisting of at least one endless conveyor (3) running in an almost vertical plane (4) and being guided therein over a number of return rollers (5a, 5b), at which the conveyor (3) serves for supporting a number of carriers (8) each consisting of an almost tube-shaped holder (9) the centre line of which is almost horizontally and square to the plane (4) of the conveyor (3), which holder (9) has been provided with a longitudinal opening (10) for bringing a piece of dough (11), or a number of pieces of dough lying next to each other in longitudinal direction of the holder, into the carrier (8) or for removing a piece of dough (11) therefrom, which carriers (8) have been closed at the ends by transverse walls (13) and means (6, 7, 14) being present between a transverse wall (13) and a conveyor (3) for supporting the carriers (8) in relation to the conveyor (3), **characterized in** that the means (6, 7, 14) present between a transverse wall (13) of a carrier (8) and a conveyor (3) are designed such that during the major part of the distance over which the carrier is displaced by means of the conveyor (3), a carrier (8) will always take up a stable position with the opening (10) of the carrier (8) being directed upwards at a certain angle (β) with the vertical and the carrier (8) tilting from the one stable position (A) to the other (E) when the conveyor (3) moves over a return roller (5a).

2. Proving chamber according to claim 1, **characterized in** that at the last return roller (5b), there where a piece of dough (11) has to be discharged from a carrier (8) moving downwards, means (15) are present for suddenly tilting the carrier (8) concerned, which is possibly already somewhat rotated, from the one stable position (F) to the other stable position (G) with the opening (10) of the carrier (8) directed downwards.

3. Proving chamber according to claim 1 or 2, **characterized in** that the means (6, 7, 14) for supporting a carrier (8) in relation to a conveyor (3) are formed by a pair (7) of bearing pins (6), which bearing pins (6) are at some distance from each other and have been directed squarely to the plane of movement (4) of the conveyor (3), in which during running of the parallel conveyor tracks, the bearing pins (6) of each pair (7) are in a similar, almost vertical plane and at least one of the bearing pins (6) cooperates with a slot (14) that has been made in the transverse wall (13) of the carrier (8) said wall being near the bearing pins (6).

4. Proving chamber according to claim 3, **characterized in** that the one pin (6) of a pair (7) of bearing pins cooperates with a slot (14) made in the transverse wall (13) of a carrier (8) and the other bearing pin (6) of the pair (7) has been pivotally connected to the same transverse wall (13).

5. Proving chamber according to claim 3, **characterized in** that the one pin (6) of a pair of bearing pins cooperates with a slot (14) made in the transverse wall (13) of a carrier (8) and the other bearing pin (6) of the pair (7) cooperates with the same or with another slot (14) in the transverse wall (13) of the carrier (8).

6. Proving chamber according to one of the preceding claims, **characterized in** that the conveying system comprises two endless conveyors (3), which run in mutually parallel planes (4), which conveyors have been provided with bearing pins (6) lying in line for pivotably supporting carriers (8) in relation to the bearing pins and being present between the conveyors.

## Patentansprüche

1. Raum zum Aufgehen von Teig, umfassend einen Raum (1) mit einem darin befindlichen Transportsystem (2), bestehend aus mindestens einem endlosen Transportband (3), welches in einer nahezu vertikalen Ebene (4) läuft und darin über eine Anzahl von Umkehrrollen (5A, 5B) geführt ist, wobei das Transportband (3) eine Anzahl von Trägern (8) trägt, wobei jeder aus einem nahezu röhrenförmigen Halter (9) besteht, dessen Mittellinie nahezu horizontal und rechtwinkelig zu der Ebene (4) des Transportbandes (3) verläuft, wobei der Halter (9) in Längsrichtung eine Öffnung (10) zum Einbringen eines Stückes Teig (11) oder einer Anzahl von Stücken Teig, die in Längsrichtung des Halters nebeneinander liegen, in den Träger (8) oder zum Ausbringen eines Stückes Teig (11) daraus aufweist, wobei die Träger (8) an den Enden durch Querwände (13) geschlossen sind und Mittel (6, 7, 14) zwischen einer Querwand (13) und einem Transportband (3) vorgesehen sind, um die Träger (8) in Bezug auf das Transportband (3) zu lagern,
**dadurch gekennzeichnet,**
daß die zwischen einer Querwand (13) eines Trägers (8) und einem Transportband (3) vorgesehenen Mittel (6, 7, 14) so gestaltet sind, daß über den größeren Teil der Strecke, auf dem der Träger mit Hilfe des Transportbandes (3) versetzt wird, ein Träger (8) immer eine stabile Position einnimmt, wobei die Öffnung (10) des Trägers (8) in einem bestimmten Winkel β zur Vertikalen nach oben gerichtet ist, und der Träger (8) von der einen stabilen Position (A) in die andere (E) kippt, wenn das Transportband (3) über eine Umkehrrolle (5A) läuft.

2. Raum zum Aufgehen von Teig nach Anspruch 1, dadurch gekennzeichnet, daß bei der letzten Umkehrrolle (5B), wo ein Stück Teig (11) aus dem abwärts laufenden Träger (8) ausgebracht werden muß, Mittel (15) vorgesehen sind, um den betreffenden Träger (8), der möglicherweise schon etwas gedreht ist, von der einen stabilen Position (F) in die andere stabile Position (G) Plötzlich zu kippen, wobei die Öffnung (10) des Trägers (8) nach unten gerichtet ist.

3. Raum zum Aufgehen von Teig nach Anspruch 1 oder 2, dadurch gekennzeichnet, daß die Mittel (6, 7, 14) zum Lagern eines Trägers (8) in Bezug auf ein Transportband (3) durch ein Paar (7) von Lagerzapfen (6) gebildet sind, wobei die Lagerzapfen (6) voneinander beabstandet und senkrecht zur Ebene (4) der Bewegung des Transportbandes (3) gerichtet sind, wobei während der Bewegung der parallelen Transportbahnen die Lagerzapfen (6) jedes Paares (7) in einer ähnlichen, nahezu vertikalen Ebene liegen und zumindest einer der Lagerzapfen (6) mit einem Schlitz (14) zusammenwirkt, der in der Querwand (13) des Trägers (8) angebracht ist, wobei die Wand nahe dem Lagerzapfen (6) liegt.

4. Raum zum Aufgehen von Teig nach Anspruch 3, dadurch gekennzeichnet, daß der eine Zapfen (6) eines Paares (7) von Lagerzapfen mit einem Schlitz (14) zusammenwirkt, der in der Querwand (13) eines Trägers (8) angebracht ist, und der andere Lagerzapfen (6) des Paares (7) als Drehpunkt dienend mit der gleichen Querwand (13) verbunden ist.

5. Raum zum Aufgehen von Teig nach Anspruch 3, dadurch gekennzeichnet, daß der eine Zapfen (6) eines Paares (7) von Lagerzapfen mit einem Schlitz (14) zusammenwirkt, der in der Querwand (13) eines Trägers (8) angebracht ist, und der andere Lagerzapfen (6) des Paares (7) mit dem gleichen oder einem anderen Schlitz (14) in der Querwand (13) des Trägers (8) zusammenwirkt.

6. Raum zum Aufgehen von Teig nach einem der vorangegangenen Ansprüche, dadurch gekennzeichnet, daß das Transportsystem zwei endlose Transportbänder (3) aufweist, welche in zueinander parallelen Ebenen (4) laufen, wobei die Transportbänder mit Lagerzapfen (6) versehen sind, die in Reihe zwischen den Transportbändern zum schwenkbaren Lagern von Trägern (8) in Bezug auf die Lagerzapfen angeordnet sind.

## Revendications

1. Chambre de levage de pâte comportant une chambre (1) ayant à l'intérieur un dispositif de transport (2) constitué d'au moins un convoyeur sans fin (3) se déplaçant dans un plan (4) pratiquement vertical et étant guidé dans celui-ci par plusieurs rouleaux de renvoi (5a, 5b), au niveau duquel le convoyeur (3) sert à supporter plusieurs porteurs (8) constitués chacun d'un dispositif de retenue (9) ayant pratiquement la forme d'un tube dont l'axe central est à peu près horizontal et perpendiculaire au plan (4) du convoyeur (3), lequel dispositif de retenue (9) comporte une ouverture longitudinale (10) pour mettre un morceau de pâte (11), ou plusieurs morceaux de pâte situés l'un à côté de l'autre dans la direction longitudinale du dispositif de retenue, dans le porteur (8) ou pour enlever un morceau de pâte (11) à partir de celui-ci, lesquels porteurs (8) sont fermés au niveau des extrémités par des parois transversales (13), et des moyens (6, 7, 14) existant entre une paroi transversale (13) et un convoyeur (3) pour supporter les porteurs (8) par rapport au convoyeur (3), caractérisée en ce que les moyens (6, 7, 14) existant entre une paroi transversale (13) d'un porteur (8) et un convoyeur (3) sont conçus de telle sorte que la majeure partie de la distance sur laquelle le porteur est déplacé par l'intermédiaire du convoyeur (3), le porteur (8) prendra toujours une position stable dans laquelle l'ouverture (10) du porteur (8) est dirigée vers le haut en formant un certain angle (β) avec la verticale et le porteur (8) en basculant de la première position stable (A) vers l'autre (E) lorsque le convoyeur (3) passe sur un rouleau de renvoi (5a).

2. Chambre de levage de pâte selon la revendication 1, caractérisée en ce qu'au niveau du dernier rouleau de renvoi (5b), là où existe un morceau de pâte (11) à décharger d'un porteur (8) se déplaçant vers le bas, des moyens (15) sont présents pour faire basculer de manière soudaine le porteur concerné (8), qui est déjà de manière possible mis quelque peu en rotation, depuis la première position stable (F) vers l'autre position stable (G) dans laquelle l'ouverture (10) du porteur (8) est dirigée vers le bas.

3. Chambre de levage de pâte selon la revendication 1 ou 2, caractérisée en ce que les moyens (6, 7, 14) destinés à supporter un porteur (8) par rapport au convoyeur (3) sont formés d'une paire (7) de doigts porteurs (6), lesquels doigts porteurs (6) sont à une certaine distance l'un de l'autre et sont dirigés perpendiculairement au plan de déplacement (4) du convoyeur (3), dans lequel pendant le déplacement le long de trajets parallèles du convoyeur, les doigts porteurs (6) de chaque paire (7) sont dans un plan similaire pratiquement vertical et au moins un des doigts porteurs (6) coopère avec une fente (14) qui est agencée dans la paroi transversale (13) du porteur (8), ladite paroi étant à proximité des doigts porteurs (6).

4. Chambre de levage de pâte selon la revendication 3, caractérisée en ce que le premier doigt (6) d'une paire (7) de doigts porteurs coopère avec une fente (14) constituée dans la paroi transversale (13) d'un porteur (8) et l'autre doigt porteur (6) de la paire (7) est relié de manière pivotante à la même paroi transversale (13).

5. Chambre de levage de pâte selon la revendication 3, caractérisée en ce que le premier doigt (6) d'une paire de doigts porteurs coopère avec une fente (14) constituée dans la paroi transversale (13) d'un porteur (8) et l'autre doigt porteur (6) de la paire (7) coopère avec la même fente (14) ou avec une autre fente (14) située dans la paroi transversale (13) du porteur (8).

6. Chambre de levage de pâte selon l'une quelconque des revendications précédentes, caractérisée en ce que le dispositif de transport comporte deux convoyeurs sans fin (3), qui se déplacent dans des plans (4) mutuellement parallèles, lesquels convoyeurs sont munis de doigts porteurs (6) se trouvant en ligne pour supporter de manière pivotante les porteurs (8) par rapport aux doigts porteurs et étant situés entre les convoyeurs.
